# EUROPEAN PATENT APPLICATION

(11) **EP 4 446 937 A1**
(43) Date of publication of application: **16.10.2024**
(21) Application number: 23179147.6
(22) Date of filing: 14.06.2023
(51) Int. Cl.: G06K 15/02, G06K 19/06

(54) **CODING METHOD FOR A FOAMED PRODUCT**

(30) Priority: 13.04.2023 EP 23382340
(71) Applicant: INGENIERIA DEL POLIURETANO FLEXIBLE S.L. - IPF INGENIERIA, 48170 Zamudio - Vizcaya (ES)
(72) Inventor: VIÑAS GOMEZ, Angel, 48170 Zamudio, Vizcaya (ES); VILLASANTE ARNAIZ, Oscar, 48170 Zamudio, Vizcaya (ES)
(74) Representative: ABG Intellectual Property Law, S.L.

(57) **Abstract**

The present invention relates to a coding method for a foamed product, the decoding method, and the code used in both methods. The coding method is particularly adapted to print a code on a surface of a foamed product, wherein the shape and surface characteristics of the foamed product may change, for example, during the curing process, giving rise to a code which deforms after printing and in which the borders of the printed image are blurred. The coding method is such that the printed code remains legible and the information it contains remains retrievable. The decoding method allows identifying the original structure of the code, even if the surface of the foamed product is uneven and has experienced shape changes from printing, and it also allows extracting the coded information.

## Description

### OBJECT OF THE INVENTION

The present invention relates to a coding method for a foamed product, the decoding method, and the code used in both methods. The coding method is particularly adapted to print a code on a surface of a foamed product, wherein the shape and surface characteristics of the foamed product may change, for example during the curing process, giving rise to a code which deforms after printing and in which the borders of the printed image are blurred. The coding method is such that the printed code remains legible and the information it contains remains retrievable.

The decoding method allows identifying the original structure of the code, even if the surface of the foamed product is uneven and has experienced shape changes from printing, and it also allows extracting the coded information.

Another object of the invention relates to the code used in both methods, being particularly adapted to be used in a foamed product the shape of which may change after manufacture.

The foamed product is preferably manufactured following one direction, giving rise to an elongated shape. This direction shall be identified throughout the text as the longitudinal direction.

### BACKGROUND OF THE INVENTION

One of the fields of the art undergoing the most intense development is the field of traceability in product manufacturing. Traceability is indispensable, for example, in the implementation of quality control methods.

Establishing traceability methods from manufacturing allows, among other applications, identifying the origin of end product batches manufactured in the same conditions, identifying specific machines employed for manufacturing the end products, the raw materials used, or even the location of the plants where manufacturing was carried out.

Traceability can incorporate additional data about the product, for example, parameters measured in the product following its manufacture which characterize its properties, measured quality-related values, or also time markings which identify when the product was manufactured.

If all these values are stored in a database, a unique link which identifies the stored record and the product must be established. Some data must also be directly accessible in the product without having to establish a data connection with the database. Barcodes and the more complex QR codes are known to that end, these codes being capable of storing an identification number or even more extensive information, such as an internet address or character strings, in the product.

In the case of QR codes, the amount of information that can be represented in the QR code is greater than in a barcode and it can be read from image capturing points that are not necessarily located in a direction perpendicular to the surface and centered in the position in which the QR code is printed. That is, the appearance of a QR code in the image capturing same is that of a code which covers an area delimited by a four-sided polygon that is not necessarily a square.

Reading is possible under these circumstances because readers allow a bijective linear transformation from the acquired four-sided polygon into the image with any viewpoint and a square. Once the code is transformed into a square, it is possible to establish the relevant positions within the QR code in which pixels representing 1 or 0 used herein as values of a binary or Boolean variable are located. This very affirmation works with any two binary values with representations such as true/false or yes/no.

However, it has been proven that QR codes are not suitable for coding foamed products, and less foamed products manufactured following preferably a longitudinal direction. That is particularly true when the code is printed during forward movement and when the product is not cured and will experience shape changes after printing.

Very typical examples of foamed products of this type are polyurethanes manufactured by mixing one or more reagents, mainly isocyanates and polyhydric alcohols which, by means of synthesis, generate a foamed product that requires time to reach the final volume and to complete the reaction in what is referred to as the curing phase.

The blocks which are generated have a surface exposed to the atmosphere, in which the reaction is completed more quickly, and the inner area which is isolated from the outside. This inner area keeps a higher temperature for a longer time when the reaction is exothermic, is not exposed to the atmosphere, and thermal energy dissipation takes time given that the foamed material is a good thermal insulator and hinders thermal energy evacuation.

The surface is that which shows a higher degree of deformation due to expansion, and when manufacturing is carried out along a longitudinal direction, deformation is furthermore greater in directions transverse to the longitudinal direction since said longitudinal configuration of the manufactured product limits the expansion in this same direction.

In the final phase, the surface forms a plastic skin, in which the material is no longer adhesive and shows a certain roughness which prevents it from being flat.

All these changes cause any code printed on the free surface of the porous product to experience different, non-homogenous, local deformations in each direction, as well as blurring effects which hinder the identification of the boundaries between the printed and non-printed areas.

The present invention allows the robust coding of a product of this nature, with robust being understood as allowing the decoding thereof by reconstructing the coded information and with a high level of confidence that the decoded information corresponds with the coded information.

### DESCRIPTION OF THE INVENTION

A first aspect of the invention relates to a coding method for a foamed product which solves the problems identified above. Coding represents a set of preestablished data, and such data, after coding, will be represented by the code printed on the product.

The foamed product produced by means of manufacturing is an elongated product extending following a longitudinal direction X-X', the forward movement direction used in the manufacturing process.

The method according to this first aspect of the invention uses:
- *printing means adapted to print on a surface of the foamed product according to a transverse direction with respect to the longitudinal forward movement direction, with the printing means being able to be activated to print in segments, wherein the segments are spaced apart from one another according to the transverse direction,*
   *the segments are ordered from a first end segment to a last end segment, and*
   *the activation of the printing means in a specific segment causes a line to be generated on the surface of the foamed product when said foamed product moves in a longitudinal direction with respect to the printing means,*
   *the activation of the printing means in the plurality of segments causes lines to be printed in rows on the surface of the foamed product when said foamed product moves in a longitudinal direction with respect to the printing means;*
- *a first processor adapted to act on the printing means such that it is adapted to activate the printing of each of the segments in an independent manner, establishing at least a first printing state to generate a line and a second non-printing state.*

The elements used in the method include, among others, printing means which print in segments, the segments being distributed according to a transverse direction with respect to the longitudinal direction. If, for example, the foamed product is in the form of a prismatic block with a direction having a greater length extending according to the longitudinal direction, the section of the block is essentially a rectangle extending according to two transverse directions which can be identified as Y-Y' and Z-Z'. The term "essentially" is used because the corners are often rounded due to the expansion mode. Normally, the foamed product with an elongated configuration extends horizontally, so two directions will be horizontal directions, for example X-X' and Y-Y', and a vertical direction, for example Z-Z'. The surface on which printing is performed can be either the vertical surface formed by directions X-X' and Z-Z' or the horizontal upper surface formed by directions X-X' and Y-Y'.

Taking the vertical surface formed by directions X-X' and Z-Z' as an example, the segments are distributed vertically according to direction Z-Z' and each of said segments also extends according to the transverse direction. That is, when the printing means activate the printing of a segment and the printing means move with respect to the product during the forward movement thereof according to the longitudinal direction X-X', a line is then printed, said line having a width that is the length of the segment and a length that is the length of the forward movement for the time that the segment has been activated. Preferably, the length of the line is greater than its width, thereby minimizing error in both the printing and the reading of the printed line since it is a product produced according to the longitudinal direction X-X'.

The printing means have a plurality of segments which, with the forward movement of the foamed product, cause the printing of as many rows as there are segments in the printing means. The printing means are such that the segments are spaced apart from one another, allowing deformation or diffusion effects expanding the boundary of the printed area, for example, the area related to a datum which can be represented with a binary value, to invade the area intended for other regions intended for representing another binary datum after some time. In this way, rows can be distinguished even with a post-printing deformation or a post-printing boundary diffusion effect.

Segment activation is simultaneous for those segments to be printed, so columns are generated. The columns are differentiated by the transition at the end and the beginning of a line. According to another embodiment, the columns can furthermore be differentiated because the printing of all the segments is halted for a time period which allows the forward movement corresponding to the spacing between columns.

The data to be printed corresponds to a binary value which, for example, can be stored in a binary variable when implemented in a processor, wherein one of the values corresponds to the activation of the printing of the segment and the other value corresponds to the inactivation of the printing of the segment, leaving the surface covering the segment during the forward movement of the product in the longitudinal direction printed in the former and not printed in the latter. The first value shall be identified as the first printing state and the second value shall be identified as the second non-printing state. When describing the decoding method that requires the reading of the code, the latter will also show two states, i.e., the printed state and the non-printed state.

Whether the segments are activated or not is controlled by a processor which is adapted to activate each of the segments in an independent manner. Given a code formed by binary values distributed according to a matrix of rows and columns, the processor activates or deactivates the segment corresponding to a column for a time, generating lines in those rows in which the binary value is the first state and not generating lines in those rows in which the binary value is the second state.

According to the first aspect of the invention, the method comprises the following steps:
- *determining, for each segment a preestablished number m of variables (xⱼ), which can be represented by means of a vector (vᵢ*(*xⱼ*); *i* = 1, ..., *n*; *j* = 1, ..., *m) for a specific row, each variable (vᵢ*(*xⱼ*)*) having a binary value to represent either the first state or the second state.*

As indicated, the code is formed by binary values distributed according to a matrix of rows and columns. Only by way of notation, the letter "*n*" is reserved to denote the number of rows and the letter "*m*" to denote the number of columns.

Likewise, the indication "which can be represented by means of a vector" for each row means that the matrix can be represented in other ways; however, this has been chosen to express the steps in the clearest manner possible. Any different expression mode which reflects the same values characterized with respect to the matrix structure shall be understood as being equivalent to that expressed with the current notation. That is, what is relevant is how values are associated with each of the positions of the matrix distribution, not how the rows or columns are identified or expressed.

In this way, the values forming row *i*^{th} are grouped into a vector denoted as *vᵢ*(*xⱼ*)*,j =* 1, ..., *m*. Each component of the vector allows storing a binary value which represents either the first state *(S*₁) or the second state *(S*₂*)*. The index *i* represents the row and the index *j* represents the column.

The printing of the matrix values by means of a movement according to the longitudinal direction X-X' requires the segments to be activated or deactivated according to the values of the family of *n* vectors for the succession of columns ranging from the first column to the *m*^{th} column. The result is the printing of a matrix of elongated lines according to the direction established by the rows and separated both between rows and between columns. That is, the forward movement direction coincides with the direction of the printed rows. The columns therefore have an orientation transverse to the longitudinal direction X-X'.

Given this matrix representation, the method establishes the mode in which each component identified by its row and column is determined:
- *carrying out, in any order, the following steps:*
   *i. defining at least one subset of variables (v*₁(*xⱼ*)*) of the first segment with values in accordance with a preestablished pattern, with the values being associated with either the first state or the second state;*
   *ii. defining at least one preestablished variable of the last segment, preferably the first variable (vₙ*(*x*₁)*) of the last segment or the last variable (vₙ*(*xₘ*)*) of the last segment, or in both (vₙ*(*x*₁)*, vₙ*(*xₘ*)*) with the value associated with the first state,*
   *iii. defining one or more of the variables (vᵢ*(*xⱼ*)*) for the rest of the segments located between the first segment and the last segment with values corresponding to a binary representation of the data to be coded, containing either the first state or the second state.*

The first segment is the segment which prints the first row. Indicating variables of the first segment should be interpreted as the set of values which determine whether or not the first segment performs printing along the forward movement of the product in the printing phase.

The values to be printed require a pattern to be preestablished for a subset of variables. For now, the remaining variables which are not in this subset are left undefined. Likewise, the subset of the pattern does not have to correspond to positions which are located in consecutive columns. According to a specific example, if the number of columns of the code to be printed is 7, the subset forming the preestablished pattern is the first value or the second value predefined for columns 1, 4, 6, and 7. In this example, columns 2, 3, and 5 are left undefined for now. Therefore, in this embodiment, the preestablished pattern corresponds to the values assigned to the subset formed by columns 1, 4, 6, and 7.

Spatial ordering in rows can be in one direction or another. Having established the direction in which the rows extend, it is possible to talk about the first row and the last row. When printing the code on a vertical surface, the first row can be located above or below. This ordering is preestablished.

A preferred example has, as a preestablished pattern, values alternating between the first value and the second value for all the values of the first row, without leaving values undefined. According to a particular preferred case, the number of columns is an odd number and the first state is defined both in the first column and in the second column, allowing the length it measures to be established in the printed code.

In the opposite row, i.e., the last row, it is one of the values that is defined with the value associated with the first state. Preferably, one end in the first column or in the last column is chosen as it allows clearly identifying the extension of the rectangular area in which the code is located. The presence of at least this value associated with the first state allows identifying the extension of the columns given that this value corresponds to the last column.

The intermediate data shows binary values which are the result of the binary coding of the data to be represented by the code. Optionally, the data can also show preestablished values. The order in which they are represented in these rows is also a preestablished order and should be known at the moment of decoding the printed code.

An example which includes preestablished values is when a value associated with the first state is included in the first column of one or more of the intermediate rows. This example is particularly useful with matrices substantially elongated, for example, in the longitudinal direction, since this first column, which always has a printed line, allows identifying when the row starts despite the existence of significant distortions after printing, even distortions that give rise to oblique deformations and offset the start of the rows according to the longitudinal direction.

According to another more specific example, all the intermediate rows have a value associated with the first state. This is particularly useful in situations where distortions are very high.

Likewise, the preestablished value associated with the first state is located in the last column for one or more, or even for all, intermediate rows. This example is also compatible with the examples described above.

At this point it should be clarified that the term "coding" or "decoding" is used in two contexts and with two different meanings. The coding and decoding methods according to embodiments of the invention are methods which allow information to be stored and retrieved in a graphical matrix representation. In turn, within the steps of these methods, there is a binary coding and binary decoding process. In this case, known techniques in which a set of data represented computationally, for example, by digits or letters, is transformed into a binary representation which can be graphically represented in two states, are used.

Therefore, examples of binary coding methods are those which allow converting the number and letter representation into binary codes. One of said methods is ascii coding in which each ascii code is represented in binary form. Another more preferred example uses a grey code: https://es.wikipedia.org/wiki/C%C3%B3digo_Gray.

At this point, each value corresponding to a row and a column must preferably have either a preestablished value or a value resulting from data coding. However, according to another embodiment, the invention can be carried out by keeping a value in a row/column position undefined, that is, it has neither a preestablished value nor a value resulting from coding. The printing step may or may not have a printing result according to the state of the variable, where this state of the variable is not predictable but will be, however, a value that will be not be taken into account in the reading process as it is indefinite. The state of the variable is said to be unpredictable because when a value is not assigned to a variable at the time it is executed on a processor, the variable often takes on values resulting from earlier stored data or other uncontrollable factors.

Additionally, the method comprises the following steps:
*a) establishing a longitudinal relative movement between the foamed product and the printing means;*
*b) by means of the first processor, for the plurality of segments, following a sequential order for each variable (vᵢ*(*xⱼ*)*)* (*j* = 1, ..., *m*) *from the first variable (vᵢ*(*x*₁)*) to the last variable (vᵢ*(*xₘ*)*), activating, for a preestablished time period, the printing means in the segments in which the value, the variable (vᵢ*(*xⱼ*)*), has as a value the one corresponding to the first state (S*₁*) for generating a line extending according to the longitudinal direction.*

A relative movement between the product and the printing means is established with steps a) and b), for example, by utilizing the movement of the product when it is being manufactured continuously or semi-continuously, and each of the columns is being printed in sequential order. For each column, there are active, for a preestablished time, only the segments in which their corresponding row and for the column that is being printed, the associated variable represents the first state, i.e., the printing state.

According to one embodiment, *the preestablished number m of components (xⱼ) is an odd number.*

According to this example, when a pattern alternating the first state and the second state is used in the first line according to a preferred example, starting from the first state ensures that the last column also ends in the first state. That is, the code has the values of the corners corresponding to the value which causes the printing. This allows identifying the end corners in the printed code which allow knowing the length of the rows beforehand.

According to an alternative embodiment, *the preestablished number (m) of components (xⱼ) is an even number.*

According to this embodiment, there are situations in which the printed code may be shorter than in the preceding example. If, furthermore, the example which uses a pattern alternating the first state and the second state is considered as a more specific example, starting from the first state leads to the last column having the second state. The length of the rows can be known, for example, if the last row always includes the last column as the first state. In other examples, particularly when it is not certain that there is always a value corresponding to the first state in the first row or the last row, the number of columns must be preestablished and known in the decoding.

According to an example applicable to any of the described methods, *the values of the pattern of the first segment are as follows:*
- *the odd*/*even variables (v*₁(*xⱼ*)*) have, associated therewith, values associated with the first state, and*
- *the even*/*odd variables (v*₁(*xⱼ*)*) have, associated therewith, values associated with the second state.*

This is the specific example which has been described above as the example in which a pattern alternating the first state and the second state is used. It should be noted that a notation in which two words are shown separated by a slash "/" is used. This allows compactly describing two options, a first option in which only the word on the left is read. In this case, the first occurrence of this notation only takes into account the word "odd" and the second occurrence of this notation only takes into account the word "even". The second option only takes into account the second word, i.e., the word on the right of "/", so only the word "even" would be taken into account the first time and only the word "odd" the second time. This very notation may be used below.

According to an embodiment applicable to all the examples described up until now, *the first processor is further adapted to receive the set of values of the variables (vᵢ*(*xⱼ*); *i* = 1, ..., *n*; *j* = 1, ..., *m) through a communication port.*

According to this embodiment, the code does not have to be generated by the first processor, rather it can be generated beforehand and transferred to the first processor to be printed on the foamed product.

According to an example applicable to any of the described methods, *in step iii), one or more variables (vᵢ*(*xⱼ*) *of at least one segment, from the rest of the segments (Iᵢ) (i* = 2, ..., *n* - 1*) located between the first segment (I*₁*) and the last segment (Iₙ), are preestablished values associated with the first state (S*₁*)*, *preferably the first variable (vᵢ*(*x*₁)*), or the last variable (vᵢ*(x*ₘ*)*) or both variables(vᵢ*(*x*₁)*, vᵢ*(*xₘ*)*)*.

This embodiment is particularly useful when the printable code is very elongated, either the number of columns is much larger than the number of rows or the number of rows is much larger than the number of columns. When it is the first row that has the value associated with the first state (S1) preestablished, the first column always has a printed line that can be used to know the beginning of the row even if positional references based on other rows are lost. This is particularly useful when deformation of the material gives rise to a printed code that is later shown distorted.

When it is the last row that has the value associated with the first state (S1) preestablished, the positional reference is also present, but the last column must first be identified in the code reading phase.

According to an alternative embodiment applicable to all the examples described up until now, *the first processor is further adapted to:*
- *receive the set of data to be coded through a communication port;*
- *execute steps i) to iii) using the data to be coded received.*

According to this alternative method, the first processor receives uncoded data, for example, a number which identifies the manufactured product, values related to the raw material, machine in which it is being manufactured, etc., and such data is converted into binary data distributed in the matrix as established by the criteria of steps i) to iii). The matrix therefore does not reach the first processor, rather it is the same processor which generates said data.

According to an embodiment applicable to all the examples that have been described, *step ii) further comprises defining the variables (vₙ*(*xⱼ*)*), i* = 1 *or n, of the first segment, of the last segment, or of both segments, that are still not defined, with values corresponding to a binary representation of the data to be coded not used in step iii).*

Up until now, there are variables of the set of values in the first row, or in the last row, or in both rows which define the matrix that remain undefined for now. These positions of the matrix allow storing additional data. According to this embodiment, these positions of the matrix are used to code data by increasing the amount of information that can be stored without increasing the number of rows and columns.

According to an embodiment applicable to all the examples that have been described, *wherein the values corresponding to a binary representation of the data to be coded are assigned to the variables (vᵢ*(*xⱼ*); *i* = 1, ..., *n*;*j* = 1, ..., m) *intended for representing a binary value of the data according to a preestablished order that is not necessarily sequential.*

All the positions in the matrix of rows and columns finally intended for storing coded data, according to this embodiment, are ordered according to a preestablished order such that the data in a sequence is ordered in positions in which that sequential order results in leaps along various positions. Once the order is established, it must be known at the time of coding, as well as at the time of decoding, such that the information can be clearly reconstructed.

The advantage of establishing an order that is not necessarily sequential, for example by rows, is that the degree of information obfuscation is very high, severely hindering decoding by a user who has access to the code but not to the coding specifications. This obfuscation technique is not incompatible with techniques for deciphering binary-coded data.

According to an embodiment applicable to all the examples that have been described, *the printing means comprise a plurality of ink injectors distributed spaced apart from one another according to the transverse direction, each ink injector being adapted to provide ink in a segment, and the plurality of ink injectors being configured to be activated in an independent manner.*

It has been proven that in this field of the art the use of independent ink injectors is particularly suitable for porous surfaces that are furthermore not flat, since they allow printing at a certain distance which compensates for the unevenness of the surface on which printing is performed.

The injectors must be able to be activated in an independent manner and each injector must be capable of printing in one segment. The arrangement of the injectors distributed according to the transverse direction and spaced apart from one another allows each injector to print one row and the printed rows to be separated. It is also possible to group the injectors, and not spaced apart from one another, in the transverse direction in order to operate same as a whole, and for this group to give rise to a line with a greater width. In this case, the group of injectors receives the same command to print or not to print.

According to an alternative embodiment of the injectors applicable to all the examples which have been described, *the printing means comprise a laser emitter with the capacity to mark a foamed product, the laser emitter being adapted to cause emission along the transverse direction in segments, the laser emitter being further configured to be activated in an independent manner during the printing of each segment.*

According to this embodiment, the use of a laser emitter capable of marking the surface of the product is configured to print a segment such that the forward movement of the product with respect to the printing means extends the marking along the segment, generating a line with the width of the line equal to the length of the segment. Such marking is also very suitable for uneven surfaces since the laser emitter is spaced from the surface.

A second aspect of the invention relates to a decoding method for decoding a code that can be generated according to a method according to any of the examples described above and applied to a foamed product.

The method uses:
- *image capturing means;*
- *a second processor in communication with the image capturing means.*

The product which is coded shows on its surface the code generated according to any of the methods described above, that is, a matrix of lines which is formed by rows of lines which form columns. The greater length of the lines is that indicated by the direction of the rows.

*The method comprises the following steps carried out by means of the second processor:*
*1. capturing an image with the image capturing means, wherein the image comprises the entire region of the printed code;*
*2. identifying a longitudinal direction, the direction in which the rows extend, as the direction of the lines;*
*3. identifying the row, either the first row or the last row, which verifies that it contains the values of a preestablished pattern, and establishing the order of the rows such that said row is the first row and the opposite row is the last row;*
*4. establishing the number of rows n and of columns m formed by the lines contained in the region;*
*5. determining positions within the image capable of showing a line;*
*6. determining, for each row, m variables, each variable having a binary value to represent either the first state of the presence of printed line and the second state of absence of ink injection depending on whether or not a line in the region of the image is present in the corresponding position determined in the preceding step*
*7. applying a binary decoding of the information corresponding to the determined variables in which there is binary-coded data.*

Capturing of the code does not require the product to be in motion and is carried out through the image capturing means. Capturing gives rise to an image in which the lines are shown, and as indicated above, the greater length of the lines determines the direction in which the rows extend. This direction, at the time of printing the code, was the longitudinal direction.

Once the direction in which the rows extend is identified, it is also possible to identify the direction in which the columns extend, i.e., the transverse direction.

Preferably, capturing by means of image capturing means is from a position perpendicular to the position of the code so that the code is not distorted. If the position is not perpendicular to the central position of the code, image distortion may occur, so according to one embodiment, a transformation is applied as the image transforms into another image in which the matrix of lines is shown within a rectangular region.

An example of the image capturing means is the combination of an image sensor and an optics, the optics being adapted to focus on the code such that the entire code is shown in a frame to be captured by the image sensor.

At this point, the preestablished pattern is provided as preliminary information and it is compared with the values represented by the lines of the first row or the last row which are the two rows in which the preestablished pattern can be located.

Indicating that a row contains values shall be interpreted to mean that the captured image shows, in a region in which a line should be located, the color corresponding to the color it acquires when the product is printed by the printing means or the color it acquires when the product is not printed by the printing means.

According to preferred embodiments of the invention, to identify a region in which a line should be located, with the line being printed or not being printed, it is sufficient to select an inner point of the region, for example its centroid, and verify if the color at that preestablished point has the color that corresponds to being printed or not being printed.

According to another embodiment, color measurement is carried out at a plurality of points such that the resulting measurement is a weighting of the measurements to prevent image noise from being able to give rise to an incorrect reading.

Another embodiment establishes a set of color measurements in the region of the line and assesses how many are closer to the color corresponding to the first state and how many are closer to the color corresponding to the second state. The final result is the first state if it has a larger number of measurements or the second state otherwise. The use of measurement of closeness allows preventing false positives or negatives due to small color differences in the measurement.

The following step establishes the number of rows and columns. There are examples in which the captured code shows this information, for example, when the first row has an odd number of columns and the end columns are always printed. This allows determining the number of columns. If there are always lines in each row, it will also be possible to determine the number of rows.

As an alternative example, the number is established because it is information that is predefined or received through a communication port, for instance.

In this way, it is already possible to establish all the positions of the image in which there are regions corresponding to a line which is printed or not printed. By performing assessments, for example such as those described above, in each region, it is possible to determine which positions show the first state or the second state for the entire matrix of values.

At this point, all the values of the matrix of variables and of the positions in which the binary-coded data is located are obtained. A binary decoding of the binary-coded data is performed on the binary-coded data so that this data can be retrieved.

According to a decoding example applicable to the second aspect of the invention, the *number of columns m formed by the lines contained in the region of step 5) is established based on the image when the code contains an odd number of columns, according to the following additional step:*
- *counting the number t of lines in the first row, which has alternating lines, determining the number of columns as m* = 2*t* - 1.

This embodiment applies when the number of columns is an odd number and can be deduced from the image because the first row contains lines in an alternating manner. The gaps or spaces without a line also count as columns, hence the number of lines observed allows deducing the number of columns.

According to another embodiment in which the printed lines allow identifying rows and columns, *the number of rows n formed by the lines contained in the region of step 4) is established based on the image according to the following additional step:*
- *counting the number n of rows as the number of rows shown in the image in the longitudinal direction.*

And alternatively, according to another embodiment applicable to the preceding embodiments, *the number of rows n formed by the lines contained in the region, the number of columns m formed by the lines contained in the region, or both, of step 4) is established by transferring said previously defined data to the second processor.*

This embodiment is particularly suitable for those cases in which it is not possible to observe, for any data to be represented, the number of rows and the number of columns. In this case, the values are known because they are transferred to the second processor which has this data and directly interprets the image knowing the positions in which the regions intended for showing a line are located.

A third aspect of the invention relates to a printable code for storing information relating to a set of data to be coded, which can be printed on a foamed product (P).

The code comprises:
- *a distribution of spaces intended for housing a longitudinal line extending along a longitudinal direction, the distribution being organized in n rows extending along the longitudinal direction, and m columns, and wherein the rows are spaced apart from one another,*
- *each position determined by its row and column being represented by a line in the case of representing a first binary state or being left blank in the case of representing a second binary state;*
- *the rows, ordered in a predetermined manner or according to an ascending order or according to a descending order;*
- *comprises a first row, wherein the positions thereof represent the first binary state and the second binary state according to a preestablished pattern, preferably with the states being alternated;*
- *in the last row, at least one preestablished position of the last row represents the first state, and wherein,*
- *the rows other than the first row and other than the last row comprise either preestablished states or states corresponding to a binary representation of the data to be coded, or representing by means of a line the first binary state or representing by means of a space without a line the second binary state.*

The code is formed by a matrix of regions intended for showing a line, the matrix being formed by rows and columns. The presence of a line shows a first state and the absence of the line shows a second state, giving rise to a binary representation of information. The expression "being left blank" must be interpreted as the absence of a printed line and not as the color having to be white. In other words, the absence of a printed line will show the color of the material support on which the line is printed.

The rows are spaced apart from one another, and the columns, according to a preferred example, are also spaced apart from one another.

The lines have a greater distance according to a direction which is the one that identifies the direction in which the rows extend.

The preestablished order determines which is the first row. For example, if the matrix is represented vertically with horizontal rows, then the first row can be located in the lower part, or according to the other alternative option, it will be located in the part in the upper part.

According to a preferred example, the first row contains alternating states which allow readily identifying rows, columns, and the ends of this first row, particularly when it is an odd number and the first and last columns represent the first state in which the line is printed.

According to a less specific example, a pattern of binary values is preestablished for a subset of columns of the first row, leaving the rest of the columns undefined for now.

The last row is identified because at least one line is always represented. The rest of the positions of the matrix of lines contains lines or does not contain lines depending on whether they are defined.

The intermediate rows and undefined values of the first row and the last row are used for storing binary information originating from a binary coding of the data to be coded, or because they are positions which contain the value of a predefined variable, for example, a value corresponding to the given second state which requires less usage of ink or marking.

According to an embodiment of the code, *at least one preestablished value in an intermediate row (fᵢ*; *i* = 2, ..., *n-1) other than the first row (f*₁*) and other than the last row (fₙ) is the value associated with the first state (S*₁*)*, *wherein the preestablished value is preferably in the first column, the last column, or both columns.*

As described in the method, the use of the first column or the last column in intermediate rows to include the first state means that the presence of a printed line is ensured, and therefore there will always be a positional reference that allows identifying the beginning or the end of the row even in conditions where the code has experienced deformations due to the evolution of the material on which the code has been initially printed. This example is particularly useful in codes elongated according to the longitudinal direction, for example.

According to an embodiment of the code applicable to any of the described examples of the code, *the preestablished position of the last row representing the first state is either the first position or the last position of the last row.*

According to this embodiment, a corner of the last row, opposite the first row, allows defining a corner of the code. When the corners of the first row are already defined, it is possible to establish the position of each of the regions intended for being able to show a line.

According to an embodiment applicable to any of the examples of code which have been described, *the positions of the first row, of the last row, or of both rows not preestablished to represent the first state or a predefined pattern are also intended for representing binary values of the data to be coded.*

According to this embodiment, the regions not representing a preestablished pattern of values are utilized to also store binary-coded information, increasing the amount of information to be represented.

### DESCRIPTION OF THE DRAWINGS

These and other features and advantages of the invention will be shown more clearly based on the following detailed description of a preferred embodiment, provided solely by way of illustrative and non-limiting example in reference to the attached figures.
- Figure 1: This figure schematically shows a foamed elongated product which moves forward in a longitudinal direction and on which the printing means print a code.
- Figure 2: This figure shows the foamed product with the code printed as a result of the application of the coding method.
- Figure 3: This figure schematically shows a decoding process for decoding a code already printed on a foamed product.

### DETAILED DESCRIPTION OF THE INVENTION

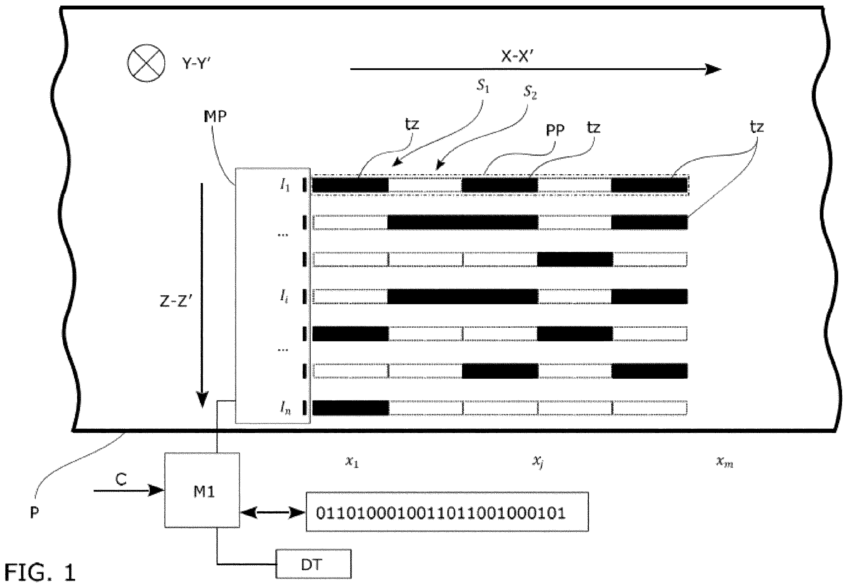

According to the first inventive aspect, the present invention relates to a coding method for a foamed product (P). Figure 1 schematically shows an elevational view of a foamed product (P) which is being manufactured continuously or semi-continuously along a longitudinal direction X-X'. The term "semi-continuously" is used when the manufacturing is continuous throughout a time period until the foamed product (P) reaches a specific length which can be handled or stored. During that time period, the product (P) moves forward according to the longitudinal direction X-X', growing in length and with a section which is essentially rectangular in this embodiment.

The forward movement of the foamed product (P) is with respect to the printing means (MP); therefore, the foamed product (P) can move while the printing means (MP) remain stationary, the foamed product (P) can remain stationary while the printing means (MP) move forward, or even both can move. In any case, forward movement should always be interpreted as the relative forward movement between the foamed product (P) and the printing means (MP).

The elevational view shows a side vertical surface which is the surface on which, in this particular example, the code with the capacity to represent data (DT) is printed. The upper and lower thick horizontal lines are projections according to the elevational view of the two horizontal faces forming the upper and lower bases of the product, respectively. In this way, the vertical face seen in Figure 1 extends according to the longitudinal direction X-X' and the vertical direction Z-Z' transverse to the longitudinal direction.

The upper and lower bases of the foamed product (P) therefore extend according to the longitudinal direction X-X' and a horizontal transverse direction Y-Y', wherein direction Y-Y' has been depicted perpendicular to the plane of Figure 1.

In this embodiment, the foamed product (P) is a polyurethane in which the components causing the reaction which gives rise to foamed polyurethane are produced in an earlier step, and although the foamed product (P) already has a prismatic shape, its shape is irregular and can continue to evolve over time and change after any image is printed on its surface. Since it is a foamed product (P), diffusion effects in the boundaries of the areas printed on an outer surface, such that the image becomes unclear, are also a possibility.

The foamed product (P) is supported on a support base which is not graphically depicted. During manufacture, data which, in this example, must be printed on the foamed product (P) is collected, such that after the deformations and effects described above, the data must be retrievable. In this embodiment, the collected data forms the set of data (DT) depicted in Figure 1 as inputs for a first processor (M1), in this embodiment, the processor (M1) will also be responsible for activating or deactivating the printing means (MP).

In this embodiment, the set of data (DT) includes a number, a serial number assigned to the block being manufactured and a reference of the machine formed by a combination of letters and numbers.

Additional information which can be included is a URL (Uniform Resource Locator) address which allows directing an Internet connection to a server with complementary data that will not be explicitly included in the printed code, but rather will be accessible through the URL link.

Both the serial number and the reference of the machine are data which is liked together and transformed into binary code. The resulting binary code in this embodiment is 0110100010011011001000101.

In this embodiment, the code to be used is formed by 7 rows and 5 columns, that is, *n* = 7 and *m* = 5.

In this embodiment, the first processor (M1) carries out the binary coding of the data and distributes same throughout the matrix formed by rows and columns. In particular, the binary-coded data is distributed in intermediate rows ranging from the second row *n* = 2 to the second-to-last row *n* = 7 - 1 = 6. The distribution can be disordered, however, in this embodiment, for the sake of clarity in the description, an ordered arrangement by rows has been chosen. In this way, the string of the binary code is grouped into five blocks of five binary digits:
|01101|00010|01101|10010|00101| wherein the vertical bar"|" is only a separator to visually show the division into blocks in this description.

For each row, the data can be represented by means of a vector *vᵢ*(*xⱼ*); with the index *i* indicating the row, *i* = 1, ..., *n*; and *xⱼ* denoting the column *j* = 1, ..., *m*. The use of *x* in the notation *xⱼ* has been chosen only to note that, for each index, the column will adopt a position along the longitudinal direction. The expression "position of the column" (and by extension of a line (tz) of the column) is used when a reference point has been preestablished. For example, in the column, the position can be the central position of the column, and for the line (tz), it can also be the central position of the line (tz) although it could also be one of its corners.

Figure 1 shows the code printed on the side surface of the foamed product (P) in which the matrix distribution of the code formed by lines (tz) which are painted or not painted is shown. The painted lines (tz) are schematically depicted in Figure 1 as a black rectangle and the unpainted lines (tz) are depicted by means of a rectangle with a dotted line. This rectangle with a dotted line is only for identifying the location where a line (tz) would be located if it were printed, not for identifying that the printed graphical element is the rectangle delimited by dots.

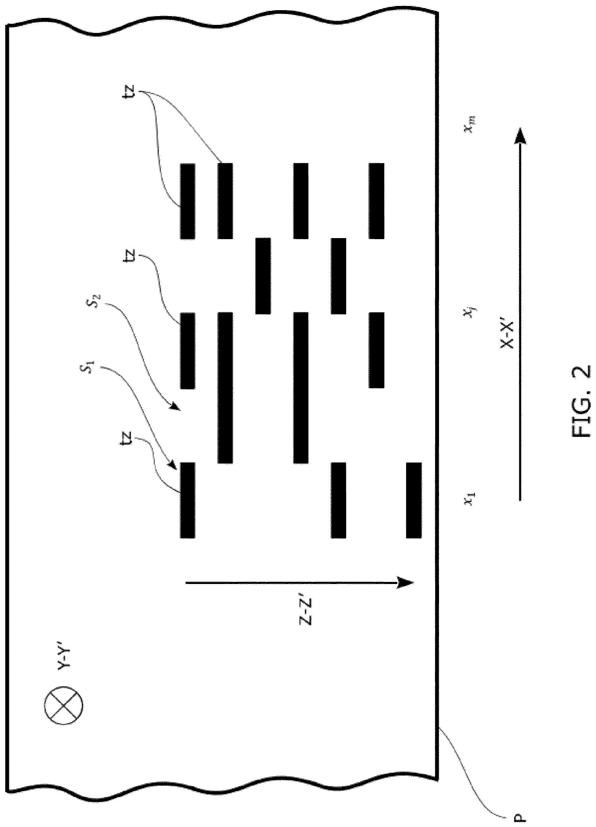

Figure 2 shows how the printed code will look without using the rectangles with a dotted line.

The binary representation of ones and zeros will be used in this embodiment to represent two states, one "1" which represents a first state (*S*₁) in which the line is indeed printed and zero "0" which represents the second state (*S*₂) in which the line is not printed. Given that this is a preestablished convention for this example, coding can be performed taking the opposite as a convention.

Continuing with the same example of Figure 1, the entire first row corresponds to a preestablished pattern (PP). In this case, the pattern alternates the first state (*S*₁) and the second state (*S*₂), beginning and ending with the first state (*S*₁). As shown in Figure 2 in which rectangles with a dotted line are not used to identify the second state (*S*₂), this pattern allows identifying the beginning and the end of the code according to the longitudinal direction identified by the direction in which the lines (tz) extend and the direction formed by the rows.

The same occurs with the last row. In this embodiment, the first column has, as a value, the first state (*S*₁) which allows determining where the last row is located, and in this case, it also allows constructing a rectangle which encompasses the entire code. That is, the position of the left and right corners is known as a result of the pattern of the first row, according to the orientation of the figure, and also the position of the first row and the last row given that both rows always have a line (tz). Continuing with this same example, the last row has the rest of the columns with values representing the second state (*S*₂) given that they reduce ink usage requirements (when ink injectors are used as the printing means), and in this example, values other than the first column were not needed to represent binary data.

The printing means (MP) according to this embodiment are ink injectors (*Iᵢ*; *i* = 1, ..., *n*) distributed along the transverse direction Y-Y' and spaced apart from one another. Each of the injectors (*Iᵢ*) are controlled in an independent manner such that the activation of each injector (*Iᵢ*) does not depend, in this embodiment, on the signal which activates or deactivates other injectors (*Iᵢ*). In this embodiment, the control of each of the injectors (*Iᵢ*) is managed by the first processor (M1).

Since the injectors (*Iᵢ*) are spaced apart from one another, printing generates bands in each row, i.e., lines (tz), which are separated from one another such that, although there are deformations or ink diffusion effects, it can be ensured that the lines are always spaced apart to prevent confusing the rows.

In Figure 1, the presence of injectors (*Iᵢ*) is schematically depicted by means of rectangular segments shown as a vertically-oriented elongated rectangle where the height thereof coincides with the width of the line (tz). When the injector (*Iᵢ*) is activated, it prints ink in the segment shown such that the relative movement between the foamed product (P) and the injector (*Iᵢ*) generates the line (tz). Therefore, the assembly of *n* injectors (*Iᵢ*; *i* = 1, ..., *n*) generates the columns, with the columns determining the state, i.e., either the first state (*S*₁) or the second state (*S*₂), by activating or deactivating respectively the corresponding injector (*Iᵢ*) according to the state.

According to an embodiment not shown in the figures, once the first column is printed, all the injectors (*Iᵢ*) are briefly deactivated to leave a space with the next column. This operation is repeated until the last column is printed, resulting in a code in which the columns, like the rows, have a certain separation.

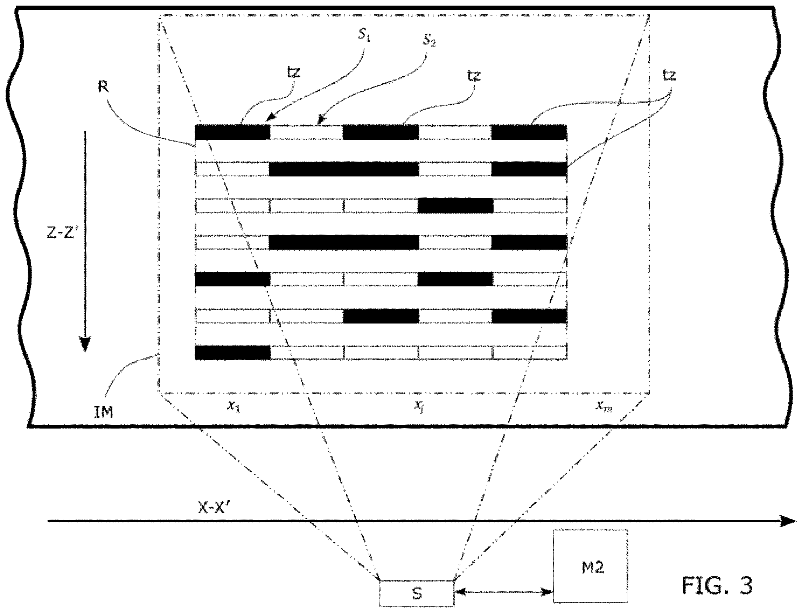

Figure 3 schematically shows the elements involved in decoding the printed code on the foamed product (P).

In the decoding method, the foamed product (P) does not need to have movement although it is possible.

Figure 3 shows the foamed product (P) with the code generated using the method according to the embodiment of the first inventive aspect although, for the sake of clarity in the description, the positions in which the line has not been printed have been schematically depicted again.

Figure 3 also shows the image capturing means (S) controlled by a second processor (M2) which is in communication by means of a line that allows activating the image capturing means (S) by means of a signal, receiving the image, and the processing it to retrieve the coded data.

In this embodiment, the image capturing means (S) comprise an image sensor capable of capturing an image formed by pixels and an optics capable of focusing the image sensor on a region of the outer surface of the foamed product (P) on which the code with the information to be retrieved is printed.

In a first step, the image capturing means (S) capture an image (IM) which, according to this embodiment, features an area which is larger than the rectangular area which encompasses the set of lines (tz).

The image shows printed lines (tz) which have an essentially rectangular shape and allow defining the longitudinal direction X-X'. This allows knowing the direction in which the columns are distributed, and also the direction in which the rows of the code are distributed.

In this embodiment, the second processor knows the preestablished pattern (PP), so it is arranged either in the first row or in the last row.

In this case, based on the image, the second processor (M2) identifies the size of the lines and their distribution, for example, by applying a segmentation algorithm. These regions are associated with a first state (*S*₁) or a second state (*S*₂) depending on the value of the predominating color in the segmented region. Although it is possible to use the value of an inner pixel, for example, the pixel which is located in the centroid, as a representative value, the occurrence of noise could cause the value of the state to rely on a single pixel, causing the method not to be very robust. The weighted assessment of several inner pixels or even of all the pixels of the segmented region associated with a painted or unpainted line is considered to be better or good.

With the distribution of the painted lines (tz), it is possible to determine the number of rows (*n*) and columns (*m*) formed by the lines (TZ) contained in a rectangular region (R) strictly containing the matrix of lines. In Figure 3, this region (R) has been depicted with a rectangle with a dashed and dotted line.

In this embodiment in which the number of columns is an odd number, the use of the pattern (PP) always generates a line in the first column and in the last column. This allows calculating the number of columns *m* by counting the number of painted lines (tz). The number of columns is therefore *m* = 2*t* - 1 with *t* being the number of painted lines (tz).

In this embodiment, the number of rows is determined through the minimum separation between the lines and the position of the first row (*f*₁) is known through the identification of the pattern (PP), as well as of the last row (*f*ₙ) which always has at least one line (tz) printed there.

In those cases in which it is not possible to determine the number of rows and/or columns, these values can be preestablished.

After knowing the values of the number of rows *n* and the number of columns *m*, it is possible to establish a matrix which determines the positions that can contain a line (tz), and it is therefore possible to establish the values of the state of each position of the matrix.

That is, for each row (*fᵢ*; *i =* 1, ..., *n*), m variables are established, each variable (*vᵢ*(*xⱼ*)) having a binary value to represent either the first state (*S*₁) of the presence of ink injection or the second state (*S*₂) of the absence of a printed line depending on whether or not a line (TZ) printed in the rectangular region (R) of the image (IM) is present in the corresponding position.

The positions which store coded binary data, in this embodiment, the positions of the intermediate rows (*fᵢ*; *i* = 2, ..., *n* - 1), are preestablished on the matrix of values, and the order is known to be consecutive for each of the rows.

Having established the consecutive values forming the string of binary values of the code, a binary decoding of the information corresponding to the determined variables (*vᵢ*(*xⱼ*)) in which there is binary-coded data is applied. The figures and letters of the data (DT) are retrieved in this process without binary coding.

A specific data obfuscation mode consists of preestablishing the order and distribution of the positions of the matrix containing binary-coded data. This distribution and ordering must be conventional in the coding method and the decoding method.

According to these methods, the presence of lines (tz) deformed by the curing process of the foamed product (P) when it has already been printed on allows to continue observing a distribution of rows and columns with painted or unpainted regions. Likewise, in the event of possible deformations due to the evolution of the foamed product (P) over time which causes deformations or ink diffusion effects, it still allows identifying the longitudinal direction as a result of the elongated configuration of the lines (tz), and therefore also the transverse configuration.

When the deformation effects are significant, increasing the length of the line (tz) will lead to robust coding and decoding methods.

Likewise, when the ink diffusion effects on the surface of the foamed product (P) are significant, the increased spacing between the injectors (*Iᵢ*) and the increased non-printing time to generate the spacing between columns also allow increasing the robustness of the method since the overlapping of the lines (tz) is prevented.

## Claims

1. Coding method for a foamed product (P), the coding representing a set of data (DT), the foamed product (P) being produced by means of manufacturing following a longitudinal forward movement direction (X-X'), the method using:
- printing means (MP) adapted to print on a surface of the foamed product (P) according to a transverse direction (Z-Z') with respect to the longitudinal forward movement direction (X-X'), with the printing means (MP) being able to be activated to print in segments, wherein
the segments are spaced apart from one another according to the transverse direction (Z-Z'),
the segments are ordered from a first end segment (*I*₁) to a last end segment (*Iₙ*)*,* and
the activation of the printing means (MP) in a specific segment (*Iᵢ*) causes a line to be generated on the surface of the foamed product (P) when said foamed product (P) moves in a longitudinal direction (X-X') with respect to the printing means,
the activation of the printing means (MP) in the plurality of segments (*Iᵢ*) causes lines (TZ) to be printed in rows on the surface of the foamed product (P) when said foamed product (P) moves in a longitudinal direction (X-X') with respect to the printing means (MP);
- a first processor (M1) adapted to act on the printing means (MP) such that it is adapted to activate the printing of each of the segments (*Iᵢ*; *i* = 1, ..., *n*) in an independent manner, establishing at least a first printing state (*S*₁) to generate a line and a second non-printing state (*S*₂);
wherein the method comprises the following steps:
- determining, for each segment (*Iᵢ*; *i* = 1, ..., *n*), a preestablished number (m) of variables (*xⱼ*), which can be represented by means of a vector (*vᵢ*(*xⱼ*); *i* = 1, ..., *n*; *j* = 1, ..., *m*) for a specific row, each variable (*vᵢ*(*xⱼ*)) having a binary value to represent either the first state (*S*₁) or the second state (*S*₂);
- carrying out, in any order, the following steps:
i. defining at least one subset of variables (*v*₁(*xⱼ*)) of the first segment (*I*₁) with values in accordance with a preestablished pattern (PP), with the values being associated with either the first state (*S*₁) or the second state (*S*₂);
ii. defining at least one preestablished variable of the last segment (*Iₙ*), preferably the first variable (*vₙ*(*x*₁)) of the last segment (*Iₙ*) or the last variable (*vₙ*(*xₘ*)) of the last segment (*Iₙ*), or in both (*vₙ*(*x*₁)*, vₙ*(*xₘ*)) with the value associated with the first state (*S*₁);
iii. defining one or more of the variables (*vᵢ*(*xⱼ*)) for the rest of the segments (*Iᵢ*) (*i* = 2, ..., *n* - 1) located between the first segment (*I*₁) and the last segment (*Iₙ*) with values corresponding to a binary representation of the data to be coded (DT), containing either the first state (*S*₁) or the second state (*S*₂);
wherein the following steps are further carried out:
a) establishing a longitudinal relative movement (X-X') between the foamed product (P) and the printing means;
b) by means of the first processor (M1), for the plurality of segments (*Iᵢ*), following a sequential order for each variable (*vᵢ*(*xⱼ*)) (*j* = 1, ..., *m*) from the first variable (*vᵢ*(*x*₁)) to the last variable (*vᵢ*(*xₘ*)), activating, for a preestablished time period, the printing means in the segments (*Iᵢ*; *i* = 1, ..., *n*) in which the value, the variable (*vᵢ*(*xⱼ*))*,* has as a value the one corresponding to the first state (*S*₁) for generating a line (TZ) extending according to the longitudinal direction (X-X').

2. Method according to claim 1, wherein the preestablished number (*m*) of components (*xⱼ*) is an odd number.

3. Method according to claim 1, wherein the preestablished number (*m*) of components (*xⱼ*) is an even number.

4. Method according to any of the preceding claims, wherein the values of the pattern (PP) of the first segment (*I*₁) are as follows:
- the odd/even variables (*v*₁(*xⱼ*)) have, associated therewith, values associated with the first state (S₁), and
- the even/odd variables (*v*₁(*xⱼ*)) have, associated therewith, values associated with the second state (*S*₂).

5. Method according to any of the preceding claims, wherein in step *iii),* one or more variables *(vᵢ*(*xⱼ*) of at least one segment, from the rest of the segments *(Iᵢ) (i =* 2, ..., *n* - 1) located between the first segment *(I*₁*)* and the last segment *(Iₙ),* are preestablished values associated with the first state *(S*₁*)*, preferably the first variable *(vᵢ*(*x*₁)*),* or the last variable *(vᵢ*(*xₘ*)*)* or both variables (*vᵢ*(*x*₁)*, vᵢ*(*xₘ*)).

6. Method according to any of the preceding claims, wherein the first processor (M1) is further adapted to receive the set of values of the variables (*vᵢ*(*xⱼ*); *i* = 1, ..., *n*; *j* = 1, ..., m) through a communication port (C).

7. Method according to any of claims 1 to 5, wherein the first processor (M1) is further adapted to:
- receive the set of data (DT) to be coded through a communication port (C);
- execute steps i) to iii) using the received data to be coded (DT).

8. Method according to any of the preceding claims, wherein step ii) further comprises defining the variables (*vᵢ*(*xⱼ*))*, i* = 1 *or n,* of the first segment (*I*₁), of the last segment (*Iₙ*), or of both segments (*I*₁, *Iₙ*), that are still not defined, with values corresponding to a binary representation of the data to be coded (DT) not used in step iii).

9. Method according to any of the preceding claims, wherein the values corresponding to a binary representation of the data to be coded (DT) are assigned to the variables (*vᵢ*(*xⱼ*); *i* = 1, ..., *n*; *j* = 1, ..., *m*) intended for representing a binary value of the data according to a preestablished order that is not necessarily sequential.

10. Method according to any of the preceding claims, wherein the printing means (MP) comprise a plurality of ink injectors distributed spaced apart from one another according to the transverse direction (Z-Z'), each ink injector being adapted to provide ink in a segment, and the plurality of ink injectors being configured to be activated in an independent manner.

11. Method according to any of the preceding claims, wherein the printing means comprise a laser emitter with the capacity to mark a foamed product (P), the laser emitter being adapted to cause emission along the transverse direction (Z-Z') in segments, the laser emitter being further configured to be activated in an independent manner during the printing of each segment.

12. Decoding method for decoding a code that can be generated according to a method according to any of claims 1 to 10 applied to a foamed product (P), the method using:
- image capturing means (S);
- a second processor (M2) in communication with the image capturing means (S); the method comprises the following steps carried out by means of the second processor (M2):
1. capturing an image (IM) with the image capturing means (S), wherein the image (IM) comprises the entire region of the printed code;
2. identifying a longitudinal direction (X-X'), the direction in which the rows extend, as the direction of the lines (TZ);
3. identifying the row, either the first row (*f*₁) or the last row (*f*ₙ), which verifies that it contains the values of a preestablished pattern (PP), and establishing the order of the rows such that said row is the first row and the opposite row is the last row;
4. establishing the number of rows (*n*) and columns (m) formed by the lines (TZ) contained in the region (R);
5. determining positions within the image (IM) capable of showing a line (TZ);
6. determining, for each row (*fᵢ*; *i* = 1, ..., *n*), *m* variables, each variable (*vᵢ*(*xⱼ*)) having a binary value to represent either the first state (*S*₁) of the presence of ink injection or the second state (*S*₂) of the absence of a printed line depending on whether or not a line (TZ) in the region (R) of the image (IM) is present in the corresponding position determined in the preceding step;
7. applying a binary decoding of the information corresponding to the determined variables (*vᵢ*(*xⱼ*)) in which there is binary-coded data.

13. Method according to claim 12, wherein the number of columns (*m*) formed by the lines (TZ) contained in the region (R) of step 5) is established based on the image when the code contains an odd number of columns, according to the following additional step:
- counting the number *t* of lines in the first row, which has alternating lines, determining the number of columns as *m* = 2*t* - 1.

14. Method according to claim 12 or 13, wherein the number of rows (*n*) formed by the lines (TZ) contained in the region (R) of step 4) is established based on the image according to the following additional step:
- counting the number *n* of rows as the number of rows shown in the image (IM) in the longitudinal direction (X-X').

15. Method according to claim 12, wherein the number of rows (*n*) formed by the lines (TZ) contained in the region (R), the number of columns (*m*) formed by the lines (TZ) contained in the region (R), or both, of step 4) is established by transferring said previously defined data to the second processor (M2).

16. Printable code for storing information relating to a set of data to be coded (DT), which can be printed on a foamed product (P) and comprises:
- a distribution of spaces intended for housing a longitudinal line (TZ) extending along a longitudinal direction (X-X'), the distribution being organized in *n* rows (*fᵢ*; *i* = 1, ..., *n*) extending along the longitudinal direction (X-X'), and m columns, and wherein the rows (*fᵢ*) are spaced apart from one another;
- each position determined by its row and column being represented by a line (TZ) in the case of representing a first binary state (*S*₁) or being left blank in the case of representing a second binary state (*S*₂);
- the rows (*fᵢ*), ordered in a predetermined manner or according to an ascending order or according to a descending order;
- comprises a first row, wherein the positions thereof represent the first binary state (*S*₁) and the second binary state (*S*₂) according to a preestablished pattern (PP), preferably with the states being alternated;
- in the last row (*fₙ*), at least one preestablished position of the last row (*fₙ*) represents the first state (*S*₁); and wherein,
- the rows (*fᵢ*; *i* = 2, ..., *n*-1) other than the first row (*f*₁) and other than the last row (*fₙ*) comprise either preestablished states or states corresponding to a binary representation of the data to be coded (DT), or representing by means of a line (TZ) the first binary state (*S*₁) or representing by means of a space without a line (TZ) the second binary state (*S*₂).

17. Code according to claim 16, wherein at least one preestablished value in an intermediate row (*fᵢ*; *i* = 2, ..., *n*-1) other than the first row (*f*₁) and other than the last row (*f*ₙ) is the value associated with the first state (*S*₁), wherein the preestablished value is preferably in the first column, the last column, or both columns.

18. Code according to claim 16 or 17, wherein the preestablished position of the last row (*fₙ*) representing the first state (*S*₁) is either the first position or the last position of the last row (*fₙ*).

19. Code according to any of claims 16 to 18, wherein the positions of the first row (*f*₁), of the last row (*fₙ*), or of both rows (*f*₁*, fₙ*) not preestablished to represent the first state (*S*₁) or a predefined pattern are also intended for representing binary values of the data to be coded (DT).
